# EUROPÄISCHE PATENTSCHRIFT

(11) **EP 0 327 164 B1**
(45) Veröffentlichungstag und Bekanntmachung des Hinweises auf die Patenterteilung: **06.04.1994**
(21) Anmeldenummer: 89200165.2
(22) Anmeldetag: 25.01.1989
(51) Int. Cl.: G02B 6/44

(54) **Verfahren zur Herstellung eines optischen Kabels**
Method of producing an optical cable
Procédé de fabrication d'un câble optique

(30) Priorität: 01.02.1988 DE 3802867
(43) Veröffentlichungstag der Anmeldung: 09.08.1989
(73) Patentinhaber: Philips Patentverwaltung GmbH, 22335 Hamburg (DE); Philips Electronics N.V., 5621 BA Eindhoven (NL)
(72) Erfinder: Broeckmann, Hermann-Josef, D-5000 Köln 80 (DE); Kölschbach, Veit, D-5000 Köln 80 (DE); Schmitz, Hans-Joachim, D-5014 Kerpen (DE); Schneider, Joerg-Michael, Dr. rer. nat., D-5060 Bergisch-Gladbach (DE)
(74) Vertreter: Erdmann, Anton, Dipl.-Ing.

(56) Entgegenhaltungen:
- EP-A- 0 165 632
- EP-A- 0 235 753
- DE-A- 3 425 649
- GB-A- 2 202 485
- PATENT JOURNAL OF REPUBLIC OF SOUTH AFRICA, Band 21, Nr. 3, März 1988, Seite 138, Zusammenfassung Nr. 87/5254, 27-01-1988, "Manufacture of cables"

## Beschreibung

Die Erfindung bezieht sich auf ein Verfahren zur Herstellung eines optischen Kabels, bei welchem um mindestens einen von einer Vorratsrolle abgezogenen Lichtwellenleiter (LWL) eine locker umgebende Hülle extrudiert wird, deren Länge nachfolgend gegenüber der Länge der durch den Extruder laufenden LWL verkürzt wird und welche danach aufgewickelt wird.

Bei einem beispielsweise durch die EP-A1 02 35 753 bekannten Verfahren dieser Art wird die Hülle nach dem Extrudieren zunächst elastisch gereckt und dann durch Entspannung verkürzt. Die Kürzung der Hülle kann jedoch auch durch thermische Schrumpfung bewirkt werden, wie es durch die DE-OS 34 25 649 bekannt ist. Weiterhin sind Kombinationen thermischer und elastisch induzierter Kürzung möglich. Auch durch kristallines Schrumpfen kann eine nachträgliche Veränderung der Länge der Hülle bewirkt werden.

Bei dem bekannten Verfahren können die Überlängen des oder der LWL über die Länge des optischen Kabels ungleichmäßig verteilt sein. Dann besteht insbesondere die Gefahr, daß die LWL auf gewissen Längenbereichen zu stark gekrümmt verlaufen.

Der Erfindung liegt die Aufgabe zugrunde, das Verfahren der eingangs genannten Art derart zu gestalten, daß die Überlängen des LWL gleichmäßig über die gesamte Länge des optischen Kabels verteilt werden.

Die Lösung gelingt dadurch, daß der bzw. die von der Vorratsrolle ablaufenden Lichtwellenleiter vor dem Einlaufen in den Extruder tordiert werden gemäß dem Verfahren nach Anspruch 1.

Wenn die Hülle über vorher tordierte LWL aufgebracht und danach gekürzt wird, nehmen der oder die LWL aufgrund der inneren elastischen Spannungen zwangsweise einen wendelförmigen Verlauf an. Dabei entspricht die Schlaglänge der Wendelung etwa der Schlaglänge der vorher aufgebrachten Torsion. Im Vergleich zu einer wellenförmigen Führung eines nicht vorher tordierten LWL ist eine gewünschte Überlänge bei geringerer Krümmung der LWL in einer Kabelhülle unterbringbar, weil insbesondere keine Zonen mit ungewollt verkleinerten Krümmungsradius entstehen. Für die Tordierung ist beispielsweise eine Vorrichtung der nach der US-PS 41 29 468 bekannten Art geeignet. Auch für die vorliegende Erfindung ist es vorteilhaft, daß eine Mehrzahl von LWL zunächst zu einem kompakten Bündel vereinigt, dann tordiert und danach in den Extruder geleitet wird. Das Bündel wird dabei in seiner Gesamtheit tordiert. Nach der Kürzung der extrudierten Hülle bleibt der kompakte Zusammenhalt des Bündels bestehen und verläuft in seiner Gesamtheit wendelförmig nach Art einer Schraubenfeder. Bevorzugt wird, daß das kompakte Bündel aus mindestens einem LWL-Flachband besteht, welches aus einer Mehrzahl von nebeneinander verbundenen LWL besteht. Vorzugsweise können mehrere LWL-Flachbänder aufeinander gelegt sein. Bei einem solchen optischen Kabel bleibt die Kompaktheit des Bündels zuverlässig erhalten, ohne daß eines oder mehrere der LWL-Flachbänder aus dem Gleichschritt des Wendelverlaufs springen.

Das Ausmaß der gewünschten Überlänge kann besonders gut und genau vorgegeben und eingehalten werden, wenn die Hülle nach der Extrusion zunächst durch eine Kühlstrecke, danach durch eine lediglich die Hülle erfassende erste Abzugseinrichtung und darauffolgend über den Umfangsbereich eines Scheibenabzugs geführt ist, dessen mit der Hülle und mindestens einem eingeschlossenen LWL gekoppelte Abzugskraft eine elastische Dehnung der Hülle im Bereich zwischen der ersten Abzugseinrichtung und dem Scheibenabzug bewirkt.

Bei einem aus mehreren LWL-Flachbändern bestehenden Bündel ist der Wendelweg der einzelnen LWL-Flachbänder verschieden. Damit die Längenunterschiede zumindest nicht ausschließlich durch unterschiedliche elastische Längsdehnungen der einzelnen LWL-Flachbänder erzielt werden müssen, wodurch gewisse LWL übermäßig belastet werden können, hat es sich als vorteilhaft erwiesen, daß zu einem kompakten Bündel zu vereinigende Lichtwellenleiter oder Gruppen von Lichtwellenleitern mit unterschiedlicher Geschwindigkeit von ihren Vorratsrollen ablaufen.

Das geschieht vorteilhaft dadurch, daß die Lichtwellenleiter oder Gruppen von Lichtwellenleitern nach dem Verlassen ihrer Vorratsrollen und vor ihrer Vereinigung zu einem kompakten Bündel über reibschlüssig führende Geschwindigkeitssteuerelemente geführt sind.

Gemäß einer vorteilhaften Ausführungsform ist vorgesehen, daß die Geschwindigkeitssteuerelemente von den LWL bzw. den Gruppen von LWL mit vorzugsweise einer Windung umschlungene drehbare Umschlingungsrollen sind, deren Durchmesser und/oder Drehzahlen unterschiedlich sind.

Gemäß einer besonders einfachen Alternative sind die Geschwindigkeitssteuerelemente abgestufte Umschlingungsdurchmesserbereiche einer Rolle. Dabei wird das LWL-Flachband, welches sich später im Kabel mit dem kleinsten Wendelradius um die Mittellinie der Hülle wendeln soll, mit der geringsten Geschwindigkeit von seiner Vorratsrolle abgezogen. Umgekehrt wird das LWL-Flachband, welches der Innenfläche der Hülle am nächsten benachbart ist, mit der größten Geschwindigkeit abgezogen.

In besonders einfacher Weise ist es auch möglich, daß LWL-Flachbänder zur Geschwindigkeitssteuerung übereinanderliegend gemeinsam über eine Umschlingungsrolle geführt sind.

Wenn die LWL-Flachbänder mit unterschiedlichen Längen zugeführt werden, nimmt das tordierte Bündel bereits vor dem Extruder in gewissem Umfang eine Wendelform an. Es hat sich als vorteilhaft erwiesen, daß dabei die auf das kompakte Bündel zwischen dem Scheibenabzug und den Geschwindigkeitssteuerelementen einwirkende Zugkraft derart bemessen ist, daß zumindest nahezu sämtliche LWL eine Längsdehnung erfahren. Dadurch wird erreicht, daß die einzelnen LWL-Flachbänder auch beim Lauf durch den Extruder fest aneinanderliegen. Dabei ist das mit der kleinsten Geschwindigkeit von seiner Vorratsrolle ablaufende LWL-Flachband lediglich tordiert, während die anderen mit mehr oder weniger radialem Abstand um das tordierte LWL-Flachband gewendelt verlaufen.

In den Unteransprüchen 12 bis 15 sind vorteilhafte Einrichtungen zur Ausübung des erfindungsgemäßen Verfahrens gekennzeichnet.

Die Erfindung und deren Vorteile werden anhand der Beschreibung der Zeichnung näher erläutert.
- Fig. 1: zeigt schematisch eine für die Ausübung des erfindungsgemäßen Verfahrens besonders geeignete Einrichtung.
- Fig. 2: zeigt fünf LWL-Flachbändern individuell zugeordnete Geschwindigkeitssteuereinrichtungen.
- Fig. 3: zeigt alternative Geschwindigkeitssteuereinrichtungen, welche als abgestufte Umfangsflächen einer einzigen Rolle ausgebildet sind.
- Fig. 4: zeigt ein Geschwindigkeitssteuerelement, bei welchem sämtliche LWL-Flachbänder übereinanderliegend um eine einzige Rolle geschlungen sind.
- Fig. 5: zeigt eine Möglichkeit zur Erzeugung vielfältiger Geschwindigkeitsstufen bei Verwendung von Geschwindigkeitssteuereinrichtungen nach Fig. 4.

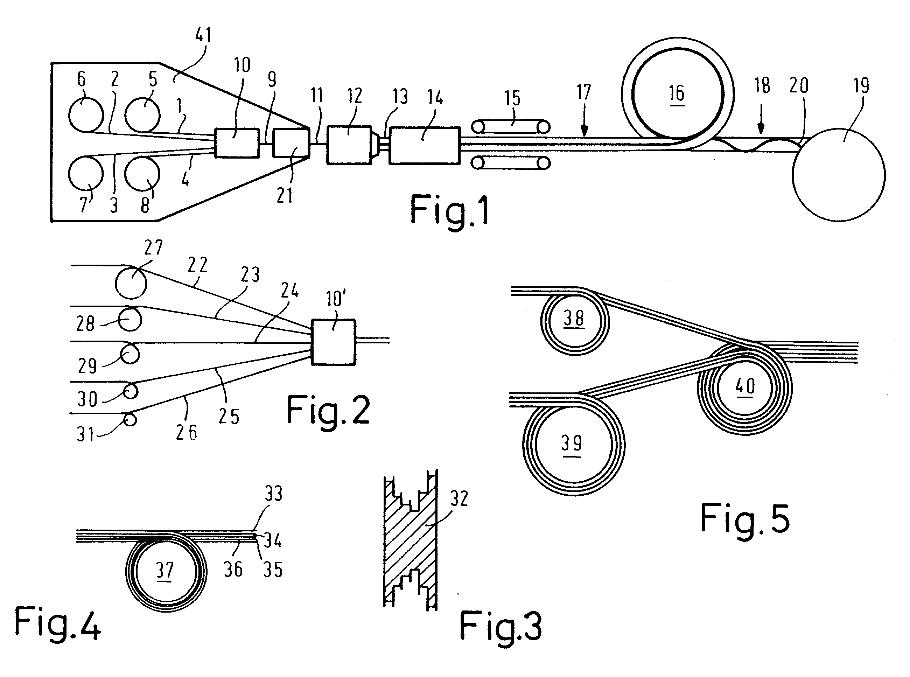

Gemäß Fig. 1 werden vier LWL-Flachbänder 1 bis 4, welche von im allgemeinen abgebremsten Vorratsrollen 5 bis 8 ablaufen, in der Bündelungseinrichtung 10 zu einem Stapel 9 zusammengeführt. Die Vorratsrollen 5 bis 8, die Bündelungseinrichtung 10 und ein Restrainer 21 sind auf einem rotierenden Tordiergestell 41 angeordnet, so daß der Stapel 9 in tordierter Form 11 in den Extruder 12 einläuft. Dort wird eine Hülle 13 mit großem Abstand herumextrudiert und in der Kühlstrecke 14 gekühlt und verfestigt. Den Abzug der Hülle 13 aus dem Extruder bewirkt der Raupenabzug 15. Der tordierte Stapel 11 wird lediglich vom Scheibenabzug 16 gezogen.

Der Raupenabzug 15, welcher nur mit der Hülle 13 kraftschlüssig gekoppelt ist, bewirkt eine kleinere Fördergeschwindigkeit der Hülle 13 als der Scheibenabzug 16, welcher die Hülle 13 und den tordierten Stapel 11 mit erhöhter Geschwindigkeit fördert. Dadurch wird die Hülle 13 im Bereich 17 elastisch gereckt. Nach dem Verlassen des Scheibenabzugs 16 wird die Hülle 13 im Bereich 18 wegen der praktisch zugkraftfreien Aufwicklung auf die Speichertrommel 19 rückgekürzt, so daß dann der tordierte Stapel 11 einen Verlauf 20 nach Art einer Wendelfeder annimmt. Dabei verlaufen die Breitseiten der LWL-Flachbänder in etwa tangential zum jeweiligen Wendelkreis. Die Wendelkreisdurchmesser sind für die einzelnen LWL-Flachbänder natürlich verschieden, jedoch bleibt der Wendeldurchmesser eines jeweiligen LWL-Fachbandes über die gesamte Kabellänge konstant, sofern mit konstanter Schlaglänge vorher tordiert wurde.

Durch verschieden starke Abzugskräfte für die Vorratsrollen 5 bis 8 kann man erreichen, daß die einzelnen LWL-Flachbänder 1 bis 4 wegen unterschiedlicher elastischer Dehnungen mit verschiedenen Geschwindigkeiten von ihren Vorratsrollen ablaufen. Dabei werden die mit einem größeren Radius gewendelten LWL-Flachbänder mit größerer Länge zugeführt, damit in diesen keine zu hohen Längskräfte entstehen. Durch richtige Wahl der Geschwindigkeitsverteilung läßt sich erreichen, daß die Zug- und/oder Druckspannungen in einem aus mehreren LWL-Flachbändern bestehenden Stapel derart verteilt sind, daß auch bei der Herstellung, der Verlegung oder betrieblicher Beanspruchung des optischen Kabels in keinem der LWL unzulässige Spannungen entstehen.

Eine geeignete Geschwindigkeitsverteilung der einzelnen LWL-Flachbänder läßt sich besonders genau und zuverlässig durch Geschwindigkeitssteuerelemente für die LWL-Flachbänder erreichen, wie sie in den Figuren 2 bis 5 angedeutet sind. Gemäß Fig. 2 werden die LWL-Flachbänder 22 bis 26 nach dem Ablauf von nicht dargestellten Vorratsrollen über individuell zugeordnete Umschlingungsrollen 27 bis 31 geführt, bevor sie in die Bündelungseinrichtung 10′ einlaufen. Diese Umschlingungsrollen können bei synchroner Drehzahl verschiedene Umschlingungsdurchmesser aufweisen. Sie können jedoch auch bei gleichem Durchmesser mit verschiedener Drehzahl gesteuert sein. Auch sind Kombinationen beider Lösungen möglich. In jedem Fall bewirken die Umschlingungsrollen 27 bis 31, daß die Geschwindigkeiten der einzelnen von den Vorratsrollen abgehenden LWL-Flachbänder verschieden sind. Beim Beispiel der Fig.2 nehmen die Durchmesser der mit gleicher Drehzahl gesteuerten Umschlingungsrollen 27 bis 31 bis zur kleinsten Rolle 31 hin ab. Im fertigen optischen Kabel hat dann das LWL-Flachband 22 den größten und das LWL Flachband 26 den kleinsten Wendeldurchmesser.

Durch entsprechend bemessene Längskräfte zwischen einem Scheibenabzug 16 nach Fig. 1 und den Umschlingungsrollen 27 bis 31 läßt sich erreichen, daß die einzelnen LWL-Flachbänder nach dem Austritt aus der Bündelungseinrichtung ihren engen Zusammenhalt behalten.

Die Ablaufgeschwindigkeiten werden über die Durchmesser der Umschlingungsrollen derart vorgegeben, daß die einzelnen LWL-Bänder im fertigen optischen Kabel mit einer solchen vergleichmäßigten Spannungsverteilung (Zugspannungen und/oder Druckspannungen) verlaufen, daß bei allen möglichen mechanischen Beanspruchungen des Kabels keiner der einzelnen LWL unzulässig gedehnt wird.

Die einzelnen Umschlingungsrollen 27 bis 31 können auch gemäß Fig. 3 zu einer einzigen Umschlingungsrolle 32 mit abgestuften Umschlingungsdurchmessern vereinigt werden.

Bei der alternativen Lösung nach Fig. 4 sind unterschiedliche Umschlingungsdurchmesser für die dort angedeuteten vier LWL-Flachbänder dadurch erreicht, daß sie radial übereinander die Umschlingungsrolle 37 umschlingen.

Bei der Lösung nach Fig. 5 verlaufen zwei LWL-Flachbänder radial übereinander über eine Umschlingungsrolle 38, während drei weitere LWL-Flachbänder radial übereinander über eine Umschlingungsrolle 39 mit größerem Durchmesser laufen. Sämtliche fünf LWL-Flachbänder werden dann zusätzlich radial übereinander über die Umschlingsrolle 40 geführt. Diese Umschlingungsrollen können verschiedene Drehzahlen und/oder Durchmesser aufweisen, so daß die Relativgeschwindigkeiten der einzelnen von ihren Vorratsrollen ablaufenden LWL-Flachbänder vielfältig variierbar sind.

Das erfindungsgemäße Verfahren wurde anhand eines Beispiels zur Herstellung eines aus mehreren LWL-Flachbändern bestehenden optischen Kabels erläutert. Dabei ist die Anzahl der LWL-Flachbänder beliebig. Bei nur einem einzigen LWL-Flachband sind natürlich keine Geschwindigkeitsteuereinrichtungen erforderlich.

Die LWL-Flachbänder insbesondere gemäß Figur 1 könnten auch durch einzelne LWL ersetzt sein.

## Patentansprüche

1. Verfahren zur Herstellung eines optischen Kabels, bei welchem um einen von einer Vorratsrolle abgezogenen Lichtwellenleiter oder um eine Gruppe von mehreren, von Vorratsrollen abgezogenen Lichtwellenleitern eine locker umgebende Hülle extrudiert wird, deren Länge nachfolgend gegenüber der Länge der durch den Extruder laufenden LWL verkürzt wird und welche danach aufgewickelt wird,
dadurch gekennzeichnet, daß dem LWL oder der Gruppe von LWL nach dem Ablaufen von der/den Vorratsrolle (n) und vor dem Einlaufen in den Extruder durch Tordieren eine Torsionsspannung aufgeprägt wird, und daß der LWL oder die Gruppe von LWL nach dem Hindurchziehen durch den Extruder durch relative Verkürzung der Hülle in einen wendelförmigen Verlauf gebracht wird.

2. Verfahren nach Anspruch 1,
dadurch gekennzeichnet, daß eine Mehrzahl von LWL zunächst zu einem kompakten Bündel vereinigt, danach tordiert und schließlich in den Extruder geleitet werden.

3. Verfahren nach Anspruch 2,
dadurch gekennzeichnet, daß das kompakte Bündel aus mindestens einem LWL-Flachband besteht, welches aus einer Mehrzahl von nebeneinander verbundenen LWL besteht.

4. Verfahren nach Anspruch 3,
dadurch gekennzeichnet, daß das kompakte Bündel aus einer Mehrzahl von aufeinanderliegenden LWL-Flachbändern besteht.

5. Verfahren nach einem der Ansprüche 1 bis 4,
dadurch gekennzeichnet, daß die Hülle nach der Extrusion zunächst durch eine Kühlstrecke, danach durch eine ledig-lich die Hülle erfassende erste Abzugseinrichtung und darauf folgend über den Umfangsbereich eines Scheibenabzugs geführt ist, dessen mit der Hülle und mindestens einem eingeschlossenen LWL gekoppelte Abzugskraft eine elastische Dehnung der Hülle im Bereich zwischen der ersten Abzugseinrichtung und dem Scheibenabzug bewirkt.

6. Verfahren nach einem der Ansprüche 2 bis 5,
dadurch gekennzeichnet, daß die zu einem kompakten Stapel (9) zu vereinigende Lichtwellenleiter oder Gruppen von Lichtwellenleitern mit unterschiedlicher Geschwindigkeit von ihren Vorratsrollen ablaufen.

7. Verfahren nach Anspruch 6,
dadurch gekennzeichnet, daß die Lichtwellenleiter oder Gruppen von Lichtwellenleitern nach dem Verlassen ihrer Vorratsrollen und vor ihrer Vereinigung zu einem kompakten Stapel über reibschlüssig führende Geschwindigkeitssteuerelemente geführt sind.

8. Verfahren nach Anspruch 7,
dadurch gekennzeichnet, daß die Geschwindigkeitssteuerelemente von den LWL bzw. den Gruppen von LWL mit vorzugsweise einer Windung umschlungene drehbare Umschlingungsrollen sind, deren Durchmesser und/oder Drehzahlen unterschiedlich sind.

9. Verfahren nach Anspruch 7,
dadurch gekennzeichnet, daß die Geschwindigkeits-steuerelemente als abgestufte Umschlingungsdurchmesser-bereiche einer Rolle ausgebildet sind.

10. Verfahren nach Anspruch 7,
dadurch gekennzeichnet, daß die LWL-Flachbänder zur Geschwindigkeitssteuerung übereinanderliegend gemeinsam über eine Umschlingungsrolle geführt sind.

11. Verfahren nach einem der Ansprüche 6 bis 10,
dadurch gekennzeichnet, daß die auf das kompakte Stapel zwischen dem Scheibenabzug und den Geschwindigkeitssteuerelementen einwirkende Zugkraft derart bemessen ist, daß zumindest nahezu sämtliche LWL eine Längsdehnung erfahren.

12. Einrichtung zur Ausübung des Verfahrens nach Anspruch 1
dadurch gekennzeichnet, daß sie folgende Baugruppen enthält:
- ein drehbares Tordiergestell, in welchem mindestens eine Vorratsrolle für einen LWL gelagert ist,
- einen Extruder zur Extrusion einer Hülle durch welchen der bzw. die vom Tordiergestell kommenden LWL geführt sind.
- eine Kühleinrichtung zur Abkühlung der extrudierten Hülle
- eine Abzugseinrichtung für die extrudierte Hülle
- eine Verkürzungseinrichtung für die Hülle.

13. Einrichtung nach Anspruch 12 zur Ausübung des Verfahrens nach Anspruch 2,
dadurch gekennzeichnet, daß das Tordiergestell eine Bündelungseinrichtung zur kompakten Bündelung der LWL enthält.

14. Einrichtung nach Anspruch 13 zur Ausübung des Verfahrens nach Anspruch 7,
dadurch gekennzeichnet, daß Geschwindigkeitssteuerelemente für die Steuerung der Geschwindigkeit der von ihren Vorratsrollen ablaufenden LWL vorgesehen sind.

15. Anordnung nach einem der Ansprüche 12 bis 14 zur Ausübung des Verfahrens nach Anspruch 5,
dadurch gekennzeichnet, daß die Kühleinrichtung unmittelbar hinter dem Extruder angeordnet ist, daß nachfolgend eine erste die Hülle abziehende Abzugseinrichtung und dahinter eine die Hülle und die LWL ziehender Scheibenabzug vorgesehen sind, zwischen welchen die Hülle elastisch gedehnt wird, und daß schließlich eine mit möglichst geringer Zugkraft aufwickelnde Aufwickeleinrichtung vorgesehen ist.

## Claims

1. A method of producing an optical cable, in which an optical waveguide or a group consisting of a plurality of optical waveguides fed forward from a supply reel is (are) provided with a loosely surrounding jacket by means of extrusion, whose length is subsequently reduced relative to the length of the OWG travelling through the extruder and is thereafter wound-up, characterized in that a torsion is induced in the OWG or group of OWGs after it (they) has (have) left the supply reel(s) and before it (they) enter(s) the extruder, and in that the OWG or group of OWGs, after being passed through the extruder, is (are) forced into a helical shape by a relative reduction of the length of the jacket.

2. A method as claimed in claim 1, characterized in that a plurality of OWG is first combined into a compact bundle, stranded thereafter and finally fed into the extruder.

3. A method as claimed in Claim 2, characterized in that the compact bundle consists of at least one OWG ribbon, which is formed by a plurality of OWGs which are interconnected in a side-by-side relationship.

4. A method as claimed in claim 3, characterized in that the compact bundle is formed by a plurality of superimposed OWG ribbons.

5. A method as claimed in any one of the Claims 1 to 4, characterized in that after extrusion the jacket is first passed through an annealing region, thereafter through a first pull-off device which only takes hold of the jacket and subsequently thereto along the periphery of a pull-off capstan, whose pull force coupled to the jacket and at least one enclosed OWG effects an elastic expansion of the jacket in the region between the first pull-off device and the pull-off capstan.

6. A method as claimed in any one of the Claims 2 to 5, characterized in that the optical waveguides or groups of optical waveguides to be combined into a compact stack (9) are unwound at different rates from their supply reels.

7. A method as claimed in claim 6, characterized in that the optical waveguides or groups of optical waveguides after having left their supply reels and before they are combined into a compact stack are passed via friction-producing rate of travel control elements.

8. A method as claimed in claim 7, characterized in that the rate of travel control elements of the OWGs or groups of OWGs, preferably are rotatable wrapping rollers around which one turn is wrapped, whose diameter and/or numbers of revolutions are different.

9. A method as claimed in claim 7, characterized in that the rate of travel control elements are in the form of stepped-down wrapping diameter regions of a roller.

10. A method as claimed in claim 7, characterized in the OWG ribbons are passed together on top of each other around a wrapping roller for the purpose of rate control.

11. A method as claimed in any one of the Claims 6 to 10, characterized in that the pull force acting on the compact stack between the pull-off capstan and the rate of travel control elements is rated such that at least substantially all the optical waveguides are subjected to a longitudinal expansion.

12. An arrangement for performing the method as claimed in claim 1, characterized in that it comprises the following components:
- a rotatable stranding frame in which at least one supply reel for an OWG is supported,
- an extruder for extruding a jacket through which the OWG(s) coming from the strander frame are passed,
- a cooling device for cooling the extruded jacket,
- a pull-off device for the extruded jacket,
- a length-reducing device for the jacket.

13. An arrangement as claimed in claim 12 for performing the method as claimed in Claim 2, characterized in that the strander frame includes a bundling device for a compact bundling of the OWGs.

14. An arrangement as claimed in Claim 13 for performing the method as claimed in claim 7, characterized in that the rate of travel control elements are provided for controlling the rate of travel of the OWGs unreeling from their supply reels.

15. An arrangement as claimed in any one of the Claims 12 to 14 for performing the method as claimed in claim 5, characterized in that the cooling device is arranged immediately behind the extruder, that subsequently there are provided a first pull-off device pulling the jacket followed by a pull-off capstan pulling the jacket and the OWG, between which the jacket is elastically expanded, and that finally a reeling device is provided which operates at the lowest possible pull force.

## Revendications

1. Procédé de fabrication d'un câble optique, suivant lequel un guide de lumière déroulé d'une bobine débitrice ou un groupe de guides de lumière déroulés de plusieurs bobines débitrices est (sont) revêtu(s) par extrusion d'une gaine peu serrée dont la longueur est subséquemment réduite par rapport à la longueur des guides de lumière passant par l'extrudeuse, ladite gaine étant ensuite enroulée, caractérisé en ce que par torsion une contrainte de torsion est provoquée dans le guide de lumière ou dans le groupe de guides de lumière déroulé(s) de la (des) bobine(s) débitrice(s) et avant qu'il(s) n'entre(nt) dans l'extrudeuse et en ce que, après avoir traversé(s) l'extrudeuse, le guide de lumière ou le groupe de guides de lumière est (sont) amené(s) à présenter un pas d'hélice du fait d'un raccourcissement relatif de la gaine.

2. Procédé selon la revendication 1, caractérisé en ce que d'abord une multiplicité de guides de lumière est réunie en un faisceau compact, qu'elle est ensuite tordue pour être introduite finalement dans l'extrudeuse.

3. Procédé selon la revendication 2, caractérisé en ce que le faisceau compact est constitué au moins d'un câble-ruban à guides de lumière comportant une multiplicité de guides de lumière juxtaposés.

4. Procédé selon la revendication 3, caractérisé en ce que le faisceau compact est constitué d'une multiplicité de câbles-ruban à guides de lumière les uns situés sur les autres.

5. Procédé selon l'une des revendications 1 à 4, caractérisé en ce que, après l'extrusion, la gaine est passée d'abord par un parcours de refroidissement, ensuite par un dispositif d'étirage n'étirant que la gaine et ensuite sur la périphérie d'un disque d'étirage dont la force d'étirage en combinaison avec la gaine et au moins un guide de lumière y enfermé provoque une dilatation élastique de la gaine dans la zone située entre le premier dispositif d'étirage et le disque d'étirage.

6. Procédé selon l'une des revendications 2 à 5, caractérisé en ce que les guides de lumière ou les groupes de guides de lumière à réunir en un empilement compact (9) sont déroulés de leurs bobines débitrices d'une vitesse différente.

7. Procédé selon la revendication 6, caractérisé en ce qu'après leur déroulement d'une bobine débitrice et avant leur réunion en un empilement compact les guides de lumière ou les groupes de guides de lumière passent des éléments de commande de vitesse présentant une friction adaptée.

8. Procédé selon la revendication 7, caractérisé en ce que les éléments de commande de vitesse des guides de lumière respectivement des groupes de guides de lumière sont constitués de bobines réceptrices rotatives comportant avantageusement une spire, dont les diamètres et/ou les vitesses de rotation sont différents.

9. Procédé selon la revendication 7, caractérisé en ce que les éléments de commande de vitesse sont conçus comme des parties en gradin d'une bobine réceptrice.

10. Procédé selon la revendication 7, caractérisé en ce que les câbles-ruban à guides de lumière destinés à commander la vitesse sont enroulés conjointement sur une bobine de réception les uns situés sur les autres.

11. Procédé selon l'une des revendications 6 à 10, caractérisé en ce que la force d'étirage exercée sur l'empilement compact entre le disque d'étirage et les éléments de commande de vitesse soit telle qu'au moins presque tous les guides de lumière subissent une dilatation longitudinale.

12. Dispositif pour la mise en ouvre du procédé selon la revendication 1, caractérisé en ce qu'il comporte les sous-groupes suivants:
- un châssis de torsion rotatif comportant au moins une bobine débitrice pour un guide de lumière,
- une extrudeuse pour l'extrusion d'une gaine par laquelle passe(nt) le(s) guide(s) de lumière sortant de l'extrudeuse,
- une dispositif de refroidissement pour refroidir la gaine extrudée,
- un dispositif d'étirage pour la gaine extrudée,
- un dispositif de raccourcissement pour la gaine.

13. Dispositif selon la revendication 12 conçu pour la mise en ouvre du procédé selon la revendication 2, caractérisé en ce que le châssis de torsion comporte un dispositif pour réunir les guides de lumière en un faisceau compact.

14. Dispositif selon la revendication 13 conçu pour la mise en ouvre du procédé selon la revendication 7, caractérisé en ce que l'on a prévu des éléments de commande de vitesse pour commander la vitesse des guides de lumière quittant leurs bobines débitrices.

15. Agencement selon l'une des revendications 12 à 14 pour la mise en ouvre du procédé selon la revendication 5, caractérisé en ce que le dispositif de refroidissement est disposé directement derrière l'extrudeuse, en ce que l'on a prévu ensuite un premier dispositif d'étirage étirant la gaine et derrière celui-ci un disque d'étirage étirant la gaine et les guides de lumière, la gaine subissant une dilatation élastique entre lesdits dispositifs, et en ce que finalement on a prévu un dispositif d'enroulement exerçant une force d'étirage aussi faible que possible.
